# EUROPÄISCHE PATENTANMELDUNG

(11) **EP 4 339 214 A1**
(43) Veröffentlichungstag der Anmeldung: **20.03.2024**
(21) Anmeldenummer: 23163425.4
(22) Anmeldetag: 22.03.2023
(51) Int. Cl.: C08F 2/50, C08F 222/10, C08G 75/045, C09D 4/00, C09D 7/41, C09D 133/14, C08F 2/44

(54) **ZUSAMMENSETZUNG, VERFAHREN ZU DEREN HERSTELLUNG, DEREN VERWENDUNG UND VERFAHREN ZUM BESCHICHTEN VON OBERFLÄCHEN**

(30) Priorität: 13.09.2022 DE 202022123339 U
(71) Anmelder: Bergolin GmbH & Co. KG, 27711 Osterholz-Scharmbeck (DE)
(72) Erfinder: Krull, Martin, 26345 Bockhorn (DE); Otting, Matthias, 28359 Bremen (DE)
(74) Vertreter: Ellberg, Nils

(57) **Zusammenfassung**

Die vorliegende Erfindung betrifft eine mit UV-Licht härtbare Zusammensetzung, welche auf mindestens einem Urethan-Acrylat-Oligomer basiert, ein Verfahren zu Herstellung der Zusammensetzung, eine Verwendung der Zusammensetzung und ein Verfahren zum Beschichten von Oberflächen mit Hilfe der Zusammensetzung. Die erfindungsgemäße, mit UV-Licht härtbare Zusammensetzung zeichnet sich durch eine einfache und schnelle Handhabung aus. Sie härtet sehr schnell aus und ist direkt nach dem Aushärten überarbeitbar, z.B. schleifbar, und kann direkt nach dem Aushärten mit einer weiteren Schicht beschichtet werden. Zusätzlich kann die Aushärtung der erfindungsgemäßen Zusammensetzung leicht und ohne gerätetechnischen Aufwand verfolgt werden; die Kontrolle des Härtungsprozesses ist sehr zuverlässig. Schließlich zeichnet sich die erfindungsgemäße Zusammensetzung durch eine außerordentlich gute Haftung an der mit ihr beschichteten Oberfläche aus und auch zu weiteren Schichten, die auf sie aufgebracht wurden.

## Beschreibung

### Hintergrund:

Die vorliegende Erfindung betrifft eine mit UV-Licht härtbare Zusammensetzung, welche auf mindestens einem Urethan-Acrylat-Oligomer basiert, einem Verfahren zu Herstellung der Zusammensetzung, eine Verwendung der Zusammensetzung und ein Verfahren zum Beschichten von Oberflächen mit Hilfe der Zusammensetzung.

In der Beschichtungs- und Klebstoffindustrie werden polymerbasierte Beschichtungsmassen und Lacke für die Beschichtung von Oberflächen eingesetzt. Die Beschichtungen dienen z.B. zu dekorativen Zwecken, verleihen den Oberflächen besondere Eigenschaften, wie eine bestimmte Haptik oder Elastizität, oder schützen die Oberflächen vor äußeren Einflüssen, wie Witterung, aggressiven Chemikalien oder sonstiger Beanspruchung.

Dabei enthalten die Beschichtungsmassen entweder hochmolekulare Polymere oder weniger hochmolekulare Oligomere. Letztere polymerisieren auf der Oberfläche zu polymeren Netzwerken und bilden so eine stabile Beschichtung. Hochmolekulare Polymere hingegen bilden die Beschichtung durch Antrocknen auf der Oberfläche, wodurch die Stabilität der Schicht niedriger ausfällt. Der Prozess des Antrocknens dauert mehrere Tage.

Für die Polymerisierung werden radikalische oder ionische Polymerisierungsmechanismen eingesetzt, die durch erhöhte Temperatur oder Lichteinwirkung ausgelöst werden können. Handelsübliche Beschichtungsmassen, die auf weniger hochmolekularen Oligomeren basieren, benötigen mindestens 30 Minuten bis zu einigen Stunden bis zur vollständigen Polymerisierung bzw. vollständigen Aushärtung. Sollen mehrere Schichten solcher Beschichtungsmassen übereinander auf die Oberfläche aufgebracht werden, ist dies an sich schon arbeitsaufwändig. Zudem erfordert es, dass jede einzelne Schicht nach dem Auftragen zunächst aushärtet und nachfolgend bearbeitet, z.B. geschliffen wird, um eine bessere Haftung der nachfolgenden Schicht zu erreichen. Dadurch entstehen lange Standzeiten bzw. Wartezeiten des Werkstücks mit der zu beschichtenden Oberfläche, was von Nachteil ist.

Weiter ist nachteilig, dass diese handelsüblichen Beschichtungsmassen in der Regel aus sogenannten 2-Komponenten-Systemen bestehen. Bei diesen müssen zwei verschiedene Reaktionspartner miteinander in Kontakt kommen, bevor die Polymerisierung starten kann. Um einen vorzeitigen Beginn der Polymerisierung zu verhindern, werden die beiden Reaktionspartner getrennt voneinander, als jeweils eine Komponente der Beschichtungsmasse, gelagert. Kurz vor dem Aufbringen auf eine Oberfläche werden die beiden Komponenten erst zusammengegeben und vermischt, so dass die Polymerisierung nach dem Aufbringen auf die Oberfläche startet. Der Teil der angemischten Beschichtungsmasse, der nicht verbraucht wurde, härtet trotzdem aus und ist dann nicht mehr für weiteres Beschichten verwendbar. Dieser Teil muss entsorgt werden. Daher haben 2-komponentige Beschichtungsmassen den Nachteil, dass der Beschichtungsprozess mehr Zeit in Anspruch nimmt, weil ein zusätzlicher Arbeitsschritt für das Zusammengegeben und Vermischen der Komponenten erforderlich ist. Weiter entstehen ökonomische und ökologische Nachteile, da nicht verbrauchte Teile der Beschichtungsmasse entsorgt werden müssen.

Bei Beschichtungsmassen, bei denen die Polymerisierung durch Lichteinwirkung ausgelöst wird, wird z.B. mit Ultraviolett-Licht (UV-Licht) gearbeitet. UV-Licht ist Licht im Wellenlängenbereich von etwa 100nm bis etwa 400nm. Als Quelle des UV-Lichts werden beispielsweise Quecksilberdampflampen eingesetzt. Der Einsatz von strahlenhärtbaren Beschichtungsmassen wird oftmals als kritisch empfunden, da es schwer ersichtlich ist, wo auf der Fläche der aufgebrachten Beschichtungsmasse bereits mit der UV-Lichtquelle durchgehärtet wurde und wo noch nicht. Dies ist vor allem auch problematisch bei Werkstücken mit großen zu beschichtenden Oberflächen, wie im Bereich des Automobilbaus, der Windkraftanlagen oder im Yacht-Bau. Weiterer Nachteil ist, dass nicht jede beliebig hohe Schichtdicke einer Beschichtungsmasse durchgehärtet werden kann, da das UV-Licht bei hoher Schichtdicke die Schicht nicht in ihrer gesamten Dicke bzw. Tiefe durchdringen kann. So kommt es in Abhängigkeit von der Tiefe der Schicht zu einer ungleichmäßigen Aushärtung, in der Folge zu einer ungleichmäßigen Struktur und daher insgesamt zu niedrigerer Stabilität der Beschichtung. Daher wird eine einzelne Schicht einer Beschichtungsmasse, bei der die Polymerisierung durch Lichteinwirkung ausgelöst wird, in der Regel mit einer Dicke von 80µm bis 120µm auf eine Oberfläche aufgetragen und maximal bis zu einer Dicke von etwa 1mm.

Es besteht deshalb nach wie vor ein Bedarf an neuen mit UV-Licht härtbaren Beschichtungsmassen, deren Aushärtung leicht und zuverlässig verfolgt werden kann. Die Beschichtungsmassen sollten sowohl schnell als auch über eine hohe Schichtdicke gleichmäßig aushärtbar sein. Weiter sollten sie einfach in ihrer Handhabung sein, deutlich kürzere Standzeiten und Prozesszeiten ermöglichen sowie die genannten ökonomischen und ökologischen Nachteile vermeiden. Wünschenswert ist weiterhin, dass die Beschichtungsmasse nach dem Aushärten auf der beschichteten Oberfläche gut haftet, und dass die Beschichtungsmasse auch eine gute Haftung zu nachfolgend auf sie aufgebrachten Schichten aufweist.

### Beschreibung

Erfindungsgemäß wird diese Aufgabe durch die mit UV-Licht härtbare Zusammensetzung mit den Merkmalen des Anspruchs 1 gelöst. Somit betrifft die Erfindung in einem ersten Aspekt eine mit UV-Licht härtbare Zusammensetzung. In einem zweiten Aspekt betrifft die Erfindung ein Verfahren zur Herstellung dieser Zusammensetzung. Die Erfindung betrifft in einem dritten Aspekt eine Verwendung der Zusammensetzung als Spachtelmasse. In einem vierten Aspekt betrifft die Erfindung ein Verfahren zum Beschichten einer Oberfläche mit der Zusammensetzung. Schließlich, in einem fünften Aspekt, betrifft die Erfindung ein mit der Zusammensetzung beschichtetes Produkt.

Zur Lösung der zuvor geschilderten Aufgabe schlägt die vorliegende Erfindung - gemäß dem ersten erfindungsgemäßen Aspekt - eine mit UV-Licht härtbare Zusammensetzung vor, die folgende Bestandteile enthält
1) mindestens ein difunktionelles Urethan-Acrylat-Oligomer, bevorzugt aliphatisch, verdünnt mit einem Reaktiv-Verdünner, bevorzugt einem Acrylat-Monomer;
2) ein thiol-funktionalisiertes Acrylat-Oligomer;
3) mindestens einen Typ I Photoinitiator, welcher sich mit UV-Licht aktivieren lässt; und
4) mindestens einen Farbwechsel-Indikator, welcher bei Bestrahlung mit UV-Licht von farbig zu farblos wechselt.

Die erfindungsgemäßen Verfahren, Verwendungen und Produkte können dieselben Merkmale umfassen, die hierin für die Zusammensetzung näher erläutert sind. Weitere Merkmale der Verfahren, Verwendungen, Produkte und der Zusammensetzung sind an anderer Stelle hierin definiert.

Die erfindungsgemäße, mit UV-Licht härtbare Zusammensetzung zeichnet sich durch eine einfache und schnelle Handhabung aus. Sie härtet sehr schnell aus und ist direkt nach dem Aushärten überarbeitbar, z.B. schleifbar. Auch kann sie direkt nach dem Aushärten mit einer weiteren Schicht, z.B. der erfindungsgemäßen Zusammensetzung, einer anderen Beschichtungsmasse oder eines Lacks, beschichtet werden. Sie ermöglicht also auch einen Mehrschichtaufbau ohne zwischenzeitliches Anschleifen von Zwischenschichten. Dadurch werden lange Stand- und Wartezeiten vermieden. Bei der erfindungsgemäßen, mit UV-Licht härtbaren Zusammensetzung handelt es sich um ein Ein-Komponenten-System; nicht verbrauchte Teile können wieder verwendet werden. Weiter weist die erfindungsgemäße Zusammensetzung eine unendliche lange Topfzeit auf und kann lange gelagert und über einen langen Zeitraum verarbeitet werden. Zusätzlich kann die Aushärtung der erfindungsgemäßen Zusammensetzung leicht und ohne gerätetechnischen Aufwand verfolgt werden, weil visuell, z.B. mit dem menschlichen Auge. Die Kontrolle des Härtungsprozesses ist zudem sehr zuverlässig. Die erfindungsgemäße, mit UV-Licht härtbare Zusammensetzung kann in einem einzelnen Beschichtungszyklus in einer hohen Schichtdicke bis zu 5mm auf eine Oberfläche aufgetragen und ausgehärtet werden. All diese vorteilhaften Eigenschaften der erfindungsgemäßen, mit UV-Licht härtbaren Zusammensetzung führen dazu, dass die Prozesszeiten massiv verkürzt sind. Schließlich zeichnet sich die erfindungsgemäße Zusammensetzung durch eine außerordentlich gute Haftung an der mit ihr beschichteten Oberfläche aus und auch zu Schichten, die auf eine Schicht der erfindungsgemäßen Zusammensetzung aufgebracht wurden.

Bei der erfindungsgemäßen Zusammensetzung handelt es sich um eine strahlenhärtende Zusammensetzung. Bei strahlenhärtenden Zusammensetzungen können aus bestimmten, z.B. mehrfach ungesättigten Verbindungen, unter Einwirkung energiereicher Strahlung hochvernetzte Polymere hergestellt werden, die u.a. als Beschichtungen für Oberflächen nutzbar sind. Für die Polymerisierung bzw. die Aushärtung können zwei verschiedene Verfahren verwendet werden, die UV-Härtung und die Elektronenstrahlhärtung. Bei der UV-Härtung wird eine strahlenhärtende Zusammensetzung mit bestimmten UV-Strahlern bestrahlt. Bei der erfindungsgemäßen strahlenhärtenden Zusammensetzung handelt es sich um eine solche mit UV-Licht (ultraviolettem Licht) härtbare Zusammensetzung. Durch die energiereiche Strahlung des UV-Lichts werden aus ebenfalls in der Zusammensetzung enthaltende UV-Initiatoren (Photoinitiatoren) Radikale erzeugt, die ihrerseits bei den ungesättigten Komponenten der Zusammensetzung eine radikalische Kettenpolymerisierung auslösen und so zu einer Vernetzung führen. Mit Hilfe bestimmter Initiatoren kann eine Polymerisierung auch als kationische Polymerisierung geführt werden.

Als sogenannte Bindemittel dienen in der erfindungsgemäßen, mit UV-Licht härtbaren Zusammensetzung Bindemittel mit Acrylatfunktionen, speziell Polyurethanacrylate. Wenn man Polyurethanverbindungen, die endständige Isocyanatgruppen enthalten, mit Hydroxyalkylacrylaten (Monoester der Acrylsäure mit einem Diol) umsetzt, entstehen Polyurethanacrylate mit endständigen ungesättigten Gruppen. Diese Polyurethanacrylate werden mit Hilfe von UV-Licht zur Reaktion gebracht mit Monomeren als sogenanntem Reaktiv-Verdünner oder reaktivem Lösemittel, so dass ein polymeres Netzwerk entsteht. In der erfindungsgemäßen, mit UV-Licht härtbaren Zusammensetzung wird als Urethanacrylat-Komponente mindestens ein Urethan-Acrylat-Oligomer eingesetzt. Das mindestens eine Urethan-Acrylat-Oligomer ist difunktionell. Bevorzugt ist das mindestens eine Urethan-Acrylat-Oligomer aliphatisch.

Das mindestens eine Urethan-Acrylat-Oligomer liegt verdünnt mit oder gelöst in einem Reaktiv-Verdünner in der erfindungsgemäßen Zusammensetzung vor. Bei dem Reaktiv-Verdünner handelt es sich bevorzugt um ein Acrylat-Monomer.

In einer bevorzugten Ausführungsform der Zusammensetzung umfasst das mindestens eine difunktionelle Urethan-Acrylat-Oligomer gemäß Bestandteil 1 mindestens zwei difunktionelle Urethan-Acrylat-Oligomere ausgewählt aus:
1a) einem difunktionellen Urethan-Acrylat-Oligomer, bevorzugt aliphatisch, verdünnt mit einem difunktionellen Acrylat-Monomer, bevorzugt Dipropylenglykoldiacrylat (DPGDA), und
1b) einem difunktionellen Urethan-Acrylat-Oligomer, bevorzugt aliphatisch; verdünnt mit einem monofunktionellen Acrylat-Monomer, bevorzugt Isobornylacrylat (IBOA), wobei die Urethan-Acrylat-Oligomere gemäß Bestandteilen 1a und 1b bevorzugt verschieden voneinander sind.

Das difunktionelle Urethan-Acrylat-Oligomer gemäß Bestandteil 1a der Zusammensetzung wird bevorzugt ausgewählt aus Miramer DP 408 oder Photocryl DP408NT (Produkte der Miwon Specialty Chemical Co., Ltd.). Das difunktionelle Urethan-Acrylat-Oligomer gemäß Bestandteil 1a liegt verdünnt mit oder gelöst in einem Reaktiv-Verdünner, einem difunktionellen Acrylat-Monomer, in der erfindungsgemäßen Zusammensetzung vor. Weiter bevorzugt hat das difunktionelle Urethan-Acrylat-Oligomer gemäß Bestandteil 1a einen Gehalt von 50 Gew.-% bis 70 Gew.-% in der Lösung des Reaktiv-Verdünners, besonders bevorzugt 60 Gew.-%.

Der Reaktiv-Verdünner gemäß Bestandteil 1a ist bevorzugt ausgewählt aus Dipropylenglykoldiacrylat (DPGDA), 1,6-Hexandioldiacrylat (HDDA) und Tripropylenglykoldiacrylat (TPGDA). Die Lösung des difunktionellen Urethan-Acrylat-Oligomers im Reaktiv-Verdünner gemäß Bestandteil 1a ist bei Normalbedingungen flüssig und weist bei 25°C eine Viskosität von 26 Pa s auf. Der Gehalt des Reaktiv-Verdünners addiert sich zu dem Gehalt des difunktionellen Urethan-Acrylat-Oligomers, so dass die Summe für Bestandteil 1a 100 Gew.-% ergibt.

Das difunktionelle Urethan-Acrylat-Oligomer gemäß Bestandteil 1b der Zusammensetzung wird bevorzugt ausgewählt aus Miramer UA5216 (Produkt der Miwon Specialty Chemical Co., Ltd.). Das difunktionelle Urethan-Acrylat-Oligomer gemäß Bestandteil 1b liegt verdünnt mit oder gelöst in einem Reaktiv-Verdünner, einem monofunktionellen Acrylat-Monomer, in der erfindungsgemäßen Zusammensetzung vor. Weiter bevorzugt hat das difunktionelle Urethan-Acrylat-Oligomer gemäß Bestandteil 1b einen Gehalt von 30 Gew.-% bis 50 Gew.-% in der Lösung des Reaktiv-Verdünners, besonders bevorzugt 40 Gew.-%. Bevorzugt hat das difunktionelle Urethan-Acrylat-Oligomer gemäß Bestandteil 1b ein Molekulargewicht von 10.000g/mol bis 50.000g/mol, weiter bevorzugt von 20.000g/mol bis 40.000g/mol, besonders bevorzugt von 30.000g/mol, wobei das Molekulargewicht mit Hilfe von Gel-Permeations-Chromatographie (GPC) bestimmt wurde.

Der Reaktiv-Verdünner gemäß Bestandteil 1b ist bevorzugt ausgewählt aus Isobornylacrylat (IBOA), 3,3,5-Trimethylcyclohexylacrylat (TMCHA) und 4-tert-Butylcyclohexylacrylat (TBCHA). Die Lösung des difunktionellen Urethan-Acrylat-Oligomers im Reaktiv-Verdünner gemäß Bestandteil 1b ist bei Normalbedingungen flüssig und weist bei 25°C eine Viskosität von 20.000 cps auf. Der Gehalt des Reaktiv-Verdünners addiert sich zu dem Gehalt des difunktionellen Urethan-Acrylat-Oligomers, so dass die Summe für Bestandteil 1b 100 Gew.-% ergibt.

Die erfindungsgemäße, mit UV-Licht härtbare Zusammensetzung enthält als Bestandteil 2 ein thiol-funktionalisiertes Acrylat-Oligomer. Das thiol-funktionalisierte Acrylat-Oligomer gemäß Bestandteil 2 wird bevorzugt ausgewählt aus Miramer ES4420NT (Produkt der Miwon Specialty Chemical Co., Ltd.). Bevorzugt ist das thiol-funktionalisierte Acrylat-Oligomer bei Normalbedingungen flüssig und weist bei 25°C eine Viskosität von 1.000 - 3.000 cps auf. Bevorzugt hat das thiol-funktionalisierte Acrylat-Oligomer gemäß Bestandteil 2 ein Molekulargewicht von 500g/mol bis 2.000g/mol, weiter bevorzugt von 1.000g/mol bis 1.500g/mol, besonders bevorzugt von 1.250g/mol, wobei das Molekulargewicht mit Hilfe von Gel-Permeations-Chromatographie (GPC) bestimmt wurde. Die Anwesenheit des thiol-funktionalisierten Acrylat-Oligomers gemäß Bestandteil 2 in der erfindungsgemäßen, mit UV-Licht härtbaren Zusammensetzung bewirkt, dass die Zusammensetzung bei Bestrahlung mit UV-Licht schnell und gleichmäßig aushärtet, und das auch bei hoher Schichtdicke.

Die erfindungsgemäße, mit UV-Licht härtbare Zusammensetzung enthält als Bestandteil 3 mindestens einen Typ I Photoinitiator, welcher sich mit UV-Licht aktivieren lässt. Photoinitiatoren sind chemische Verbindungen, die nach Absorption von (UV-) Licht in einer Photolysereaktion zerfallen und so reaktive Spezies bilden, die eine Reaktion starten (initiieren) können, z.B. eine Polymerisierung. Bei den reaktiven Spezies handelt es sich um Radikale oder um Kationen. Dazu wird allgemein UV-Licht im Bereich von 250nm bis 400nm eingesetzt.

Photoinitiatoren für die radikalische Kettenreaktion werden in zwei Typen unterteilt. Typ-I-Photoinitiatoren erzeugen Radikale direkt in einer Photofragmentation. Das gebildete Radikal löst dann die Kettenpolymerisation aus. Typ-II-Photoinitiatoren hingegen abstrahieren ein Wasserstoffatom von einem benachbarten Molekül und bilden auf diese Weise ein Radikal. Kationische Photoinitiatoren erzeugen bei Zerfall eine Brönsted- oder eine Lewis-Säure.

Bevorzugt ist der mindestens eine Typ I Photoinitiator gemäß Bestandteil 3 der erfindungsgemäßen, mit UV-Licht härtbaren Zusammensetzung ausgewählt aus der Gruppe enthaltend α-Hydroxy-Arylketon, Acylphosphinoxid, Acylphosphinat und eine Mischung davon; weiter bevorzugt 2-Hydroxy-2-methyl-1-phenylpropanon (Omnirad 1173), Ethyl (2,4,6-trimethylbenzoyl) phenylphosphinat (Lucirin TPO-L, Absorptionsmaximum bei 369 nm, Produkt der BASF Aktiengesellschaft, Ludwigshafen, Deutschland), Phenylbis (2,4,6-trimethylbenzoyl) phosphin-oxid (Keycure PI-981, Absorptionsmaxima bei 338, 378, 405 nm), 2,4,6-Trimethylbenzoyldiphenylphosphinoxid (Lucirin TPO, Produkt der BASF Aktiengesellschaft, Ludwigshafen, Deutschland) und eine Mischung davon. Bevorzugt enthält die erfindungsgemäße Zusammensetzung keinen Thermoinitiator und keine Initiatoren enthaltend Peroxid- oder Azo-Gruppen.

Die erfindungsgemäße, mit UV-Licht härtbare Zusammensetzung enthält als Bestandteil 4 mindestens einen Farbwechsel-Indikator, welcher bei Bestrahlung mit UV-Licht von farbig zu farblos wechselt. Bevorzugt ist der mindestens eine Farbwechsel-Indikator gemäß Bestandteil 4 ausgewählt aus der Gruppe enthaltend CR234-BT2B, CR234, CR234B1, CR234BT1, CR236, CR234-R33 und CR234-V4 (Produkte der Spectra Photopolymers, USA); weiter bevorzugt CR234-BT2B und CR236. Die Farbwechsel-Indikatoren CR234-BT2B, CR234, CR234B1, CR234BT1 sind vor Einwirkung von UV-Licht blau, die Farbwechsel-Indikatoren CR236 und CR234-R33 sind vor Einwirkung von UV-Licht rot und der Farbwechsel-Indikator CR234-V4 ist vor Einwirkung von UV-Licht violett. Alle Farbwechsel-Indikatoren werden durch die Einwirkung von UV-Licht farblos. Der Verlust der Farbe der Farbwechsel-Indikatoren bei Einwirkung von UV-Licht ist vollständig und irreversibel.

Der Farbwechsel-Indikator sorgt dafür, dass die erfindungsgemäße, mit UV-Licht härtbare Zusammensetzung vor dem Einwirken von UV-Licht und vor dem Härten bzw. Polymerisieren die Farbe des Farbwechsel-Indikators hat, also farbig ist. Beim Einwirken von UV-Licht verblasst die Farbe der mit UV-Licht härtbaren Zusammensetzung. Nach dem Aushärten der Zusammensetzung ist die Farbe vollständig verschwunden. Der Farbwechsel-Indikator zeigt also an, wann die mit UV-Licht härtbare Zusammensetzung ausgehärtet ist. Dies ist vorteilhaft, weil beim Beschichten einer Oberfläche mit der mit UV-Licht härtbaren Zusammensetzung zeiteffektiv gearbeitet werden kann. Die Bestrahlung einer beschichteten Oberfläche bzw. das Härten muss nur solange durchgeführt werden bis die Aushärtung erreicht ist. Es ist nicht notwendig, für das Härten zusätzliche Zeit aufzuwenden, um sicher zu gehen, dass die Aushärtung erfolgt ist. Weiter ist die Anzeige der Aushärtung mit Hilfe eines Farbwechsel-Indikators für die Beschichtung vorteilhaft, wenn die verfügbaren UV-Licht-Quellen nicht in der Lage sind, gleichzeitig auf die gesamte beschichtete Oberfläche einzuwirken. Die UV-Licht-Quelle muss daher über die Oberfläche bewegt werden (oder umgekehrt, die Oberfläche muss unter der UV-Licht-Quelle hinweggeführt werden) bis jeder Teil der Oberfläche ausreichend Strahlung erhalten hat, um die Aushärtung der aufgebrachten, mit UV-Licht härtbaren Zusammensetzung zu erreichen. Dabei ist es sehr hilfreich aufgrund der Farbe der Zusammensetzung zu sehen, in welchem Bereich der Oberfläche bereits gehärtet wurde und gezielt die Bereiche mit der UV-Licht-Quelle anzusteuern, wo noch nicht gehärtet wurde. Die Anzeige der Aushärtung mit Hilfe des Farbwechsel-Indikators ist ebenfalls vorteilhaft bei der anschließenden Erfolgskontrolle, da aufgrund der Farbe der Zusammensetzung leicht zu identifizieren ist, in welchem Bereich der beschichteten Oberfläche versehentlich nicht oder nicht ausreichend gehärtet wurde. Dort kann dann zielgerichtet nachgehärtet werden und so die Qualität der Beschichtung optimiert werden. Auf diese Weise können vorteilhafterweise sowohl kleine Oberflächen im Bereich bis 4m², bevorzugt 10cm² bis 4m² vollständig beschichtet werden. Vollständig beschichtet bedeutet hier ohne Fehlstellen. Es kann sich um eine vollständig neu aufgebrachte Beschichtung handeln oder um eine Reparatur einer Schadstelle in einer bestehenden Beschichtung. Besonders vorteilhaft ist, dass auch große Oberflächen vollständig beschichtet werden können, wie sie im Bereich des Automobilbaus, der Windkraftanlagen, z.B. bei Rotorblättern, oder im Yacht-Bau vorliegen.

In einer weiteren Ausführungsform der mit UV-Licht härtbaren Zusammensetzung enthält die Zusammensetzung als weiteren Bestandteil:
5) einen Acrylsäureester, bevorzugt einen Acrylsäuredodecylester, weiter bevorzugt ein monofunktionelles Laurylacrylat-Monomer. Noch weiter bevorzugt ist Bestandteil 5 ausgewählt aus Miramer M122 (Produkt der Miwon Specialty Chemical Co., Ltd.). Bevorzugt ist der Acrylsäureester bei Normalbedingungen flüssig und weist bei 25°C eine maximale Viskosität von 15cps auf. Die Anwesenheit des Acrylsäureesters gemäß Bestandteil 5 in der erfindungsgemäßen, mit UV-Licht härtbaren Zusammensetzung trägt dazu bei, die Viskosität der Zusammensetzung optimal einzustellen. Außerdem trägt der Acrylsäureester zu der besonders guten Haftfestigkeit der Zusammensetzung auf Oberflächen bei.

In einer weiteren Ausführungsform der mit UV-Licht härtbaren Zusammensetzung enthält die Zusammensetzung als weiteren Bestandteil:
6) einen Adhäsionspromotor, bevorzugt ein Phosphat-Methacrylat-Oligomer, bevorzugt ein Phosphat-Methacrylat-Oligomer mit der Funktionalität 1,5. Noch weiter bevorzugt ist Bestandteil 6 ausgewählt aus Miramer SC 1400, Miramer A99 (Produkte der Miwon Specialty Chemical Co., Ltd.) und Ebecryl 168 (Produkt der Allnex GmbH, Deutschland). Bestandteil 6 wirkt in der mit UV-Licht härtbaren Zusammensetzung als Adhäsionspromotor; er verleiht der aus der Zusammensetzung entstehenden Beschichtung eine sehr gute Haftung an die zu beschichtende Oberfläche.

Bevorzugt enthält die erfindungsgemäße, mit UV-Licht härtbare Zusammensetzung kein Polyamin oder Monoamin mit einer gegenüber Isocyanaten oder Urethanen reaktiven Amino-Gruppe.

In einer weiteren Ausführungsform der mit UV-Licht härtbaren Zusammensetzung enthält die Zusammensetzung als weiteren Bestandteil:
7) mindestens einen Füllstoff, bevorzugt ein Schichtsilikat und/oder Kieselsäure, weiter bevorzugt Talkum (Mg₃[(OH)₂]Si₄O₁₀, Magnesiumsilikathydrat) und/oder Kieselsäure. Mit Hilfe dieser Füllstoffe wird die Viskosität der mit UV-Licht härtbaren Zusammensetzung eingestellt. Bevorzugt wird die Viskosität so eingestellt, dass die Zusammensetzung eine Konsistenz erhält, in der sie sich sehr gut auf eine Oberfläche aufspachteln lässt, zu einer gleichmäßigen Schichtdicke verläuft, aber von einer geneigten oder vertikalen Oberfläche trotzdem nicht vor dem Härten hinunterläuft.

Bevorzugt weist die erfindungsgemäße, mit UV-Licht härtbare Zusammensetzung die oben aufgeführten Bestandteile in den folgenden Gehalten auf:
Bestandteil 1a) das difunktionelle Urethan-Acrylat-Oligomer verdünnt mit einem difunktionellen Acrylat-Monomer: 20 bis 35%, bevorzugt 25 bis 30%, weiter bevorzugt 27 bis 29%, bezogen auf das Gesamtgewicht der Zusammensetzung; und/oder
Bestandteil 1b) das difunktionelle Urethan-Acrylat-Oligomer verdünnt mit einem monofunktionellen Acrylat-Monomer: 20 bis 35%, bevorzugt 25 bis 30%, weiter bevorzugt 26 bis 28%, bezogen auf das Gesamtgewicht der Zusammensetzung; und/oder
Bestandteil 2) das thiol-funktionalisierte Acrylat-Oligomer: 5 bis 20%, bevorzugt 10 bis 19%, weiter bevorzugt 16 bis 17%; und/oder
Bestandteil 3) der mindestens eine Typ I Photoinitiator oder die Summe aller Typ I Photoinitiatoren: 0,01 bis 10%; bevorzugt 0,1 bis 7%, weiter bevorzugt 0,1 bis 5%; und/oder
Bestandteil 4) der mindestens eine Farbwechsel-Indikator oder die Summe aller Farbwechsel-Indikatoren: 0,01 bis 5%, bevorzugt 0,01 bis 2%, weiter bevorzugt 0,05 bis 1%; und/oder
Bestandteil 5) der Acrylsäureester: 8 bis 20%, bevorzugt 10 bis 16%, weiter bevorzugt 11 bis 13%; und/oder
Bestandteil 6) der Adhäsionspromotor: 1 bis 10%, bevorzugt 3 bis 9%, weiter bevorzugt 5 bis 7%; und/oderBestandteil 7) der mindestens eine Füllstoff oder die Summe aller Füllstoffe: 1 bis 10%, bevorzugt 3 bis 8%, weiter bevorzugt 5 bis 6%; und wobei die Gehalte der einzelnen Bestandteile so aufeinander abgestimmt sind, dass ihre Summe 100% beträgt. Bei den %-Angaben handelt es sich Gew.-%.

Bevorzugt enthält die erfindungsgemäße, mit UV-Licht härtbare Zusammensetzung keine trifunktionellen Acrylate.

Bevorzugt ist die erfindungsgemäße, mit UV-Licht härtbare Zusammensetzung gemäß einer der vorhergehenden Ausführungsformen lösemittelfrei, d.h. sie enthält keine organischen oder anorganischen Lösemittel. Weiter bevorzugt sind Lösemittel in einer Konzentration von höchstens 0,1% enthalten, weiter bevorzugt von 0,01% bis 0,1%. Bei den %-Angaben handelt es sich Gew.-% oder Vol.-%. In der erfindungsgemäßen, mit UV-Licht härtbaren Zusammensetzung dienen die bei Normalbedingungen als Flüssigkeit vorliegenden Bestandteile, z.B. die Reaktiv-Verdünner, dazu, die übrigen Bestandteile zu lösen oder zu dispergieren. Nach dem Härten der Zusammensetzung bzw. dem Polymerisieren sind alle ursprünglich flüssigen Bestandteile in der entstandenen Polymermatrix (Polymernetzwerk) vernetzt. Dies hat den Vorteil, dass in dem entstandenen Polymernetzwerk kein Lösemittel enthalten ist. Die Anwesenheit von Lösemitteln in dem entstandenen Polymernetzwerk wäre von Nachteil, da es bei hohen Temperaturschwankungen, denen eine so beschichtete Oberfläche ausgesetzt sein kann, zu zusätzlichen Belastungen des Polymernetzwerks bzw. der Beschichtung kommt, die deren Haltbarkeit herabsetzt.

Bevorzugt enthält die die erfindungsgemäße, mit UV-Licht härtbare Zusammensetzung keine siliciumhaltigen Verbindungen, also z.B. keine Silane, Siloxane oder Silikone.

Bevorzugt ist die erfindungsgemäße, mit UV-Licht härtbare Zusammensetzung eine Spachtelmasse, weiter bevorzugt eine ein-komponentige Spachtelmasse. Spachtelmassen lassen sich leicht auf Oberflächen auftragen. Sie sind besonders für unebene, nicht-plattenförmige und/oder unregelmäßig geformte Oberflächen geeignet.

Im Gegensatz zu den gebräuchlichen zwei-komponentigen Beschichtungsmassen ist die vorliegende Zusammensetzung bevorzugt eine ein-komponentige Beschichtungsmasse, weiter bevorzugt eine ein-komponentige Spachtelmasse. Diese hat den Vorteil, dass sie direkt nach ihrer Herstellung gebrauchsfertig ist, während zwei-komponentige Systeme entweder in Kartuschen verarbeitet werden müssen oder vor Gebrauch erst frisch angemischt werden müssen. Mit Beginn des Mischens startet auch die Polymerisierung bzw. die Härtung. Daher ist die Verarbeitungszeit einer zwei-komponentigen Beschichtungsmasse begrenzt. Das Gemisch eines zwei-komponentigen Systems, welches nicht verarbeitet wurde, härtet trotzdem aus und muss entsprechend entsorgt werden. Demgegenüber hat die erfindungsgemäße ein-komponentige Beschichtungsmasse bzw. ein-komponentige Spachtelmasse den Vorteil, dass nach ihrem Gebrauch überschüssiges, nicht verwendetes Material weiter gelagert werden kann ohne zu härten und zu einem späteren Zeitpunkt weiter verwendet werden kann.

Bevorzugt hat die erfindungsgemäße, mit UV-Licht härtbare Zusammensetzung eine unendliche Topfzeit. Unter der Topfzeit versteht man die Verarbeitbarkeitsdauer von reaktiven Materialien, z.B. härtbaren Beschichtungsmassen. Das Ende der Topfzeit zeigt sich durch deutlichen Viskositätsanstieg, der eine weitere Verarbeitung verhindert. Im Rahmen der vorliegenden Erfindung wird unter der Topfzeit die Zeit zwischen dem Anmischen der mit UV-Licht härtbaren Zusammensetzung und dem Ende ihrer Verarbeitbarkeit verstanden, also die Zeitspanne, in der sich die mit UV-Licht härtbare Zusammensetzung aus einem Topf nehmen und verarbeiten lässt. Die erfindungsgemäße, mit UV-Licht härtbare Zusammensetzung hat bevorzugt nach dem Anmischen eine unendliche Topfzeit bzw. ist unendlich lang verarbeitbar solange sie unter geeigneten Bedingungen gelagert wird, z.B. unter Ausschluss von UV-Licht. Unter diesen Bedingungen ist die erfindungsgemäße Zusammensetzung auch unendlich lange lagerbar und haltbar, ohne dass es zu vorzeitigem, unerwünschten Härten kommt.

Bevorzugt ist die erfindungsgemäße, mit UV-Licht härtbare Zusammensetzung in einer Schichtdicke von bis zu 5mm, weiter bevorzugt in einer Schichtdicke von 1µm bis 5mm, noch weiter bevorzugt von 80µm bis 5mm, stärker bevorzugt von 0,2 bis 5mm, noch stärker bevorzugt von 0,5mm bis 5mm, bevorzugter von 1mm bis 5mm, noch bevorzugter von größer 1mm bis gleich 5mm, weiter bevorzugter von 2mm bis 5mm, noch weiter bevorzugter von größer 2mm bis gleich 5mm, am bevorzugtesten von 3mm bis 5mm auf eine Oberfläche in einem einzelnen Beschichtungszyklus auftragbar und aushärtbar. Dies war überraschend, da herkömmliche Beschichtungsmassen lediglich bis 1mm Schichtdicke in einem Beschichtungszyklus gut auf eine Oberfläche auftragbar und aushärtbar sind. Sind höhere Schichtdicken erforderlich, müssen mehrere Schichten in separaten Beschichtungszyklen aufgebracht werden, was arbeitsaufwändig und zeitaufwändig ist. In der erfindungsgemäßen, mit UV-Licht härtbaren Zusammensetzung bewirkt die Auswahl der Acrylat-Verbindungen (Bestandteile 1 bzw. 1a, 1b; 2, 5), insbesondere des thiol-funktionalisierten Acrylat-Oligomers (Bestandteil 2), und deren oben angegebene Gehalte, dass die Zusammensetzung auch in hohen Schichtdicken bis 5mm in einem Beschichtungsschritt sehr gut auf eine Oberfläche auftragbar und aushärtbar sind.

In einem zweiten Aspekt betrifft die Erfindung ein Verfahren zur Herstellung der erfindungsgemäßen, mit UV-Licht härtbaren Zusammensetzung, wobei das Verfahren die Schritte enthält:
i) Vorlegen von Bestandteilen 1 bis 2, bevorzugt Bestandteilen 1a, 1b und 2; und optional Bestandteilen 5 und/oder 6 in einem Gefäß und Vermischen der Bestandteile bis eine Mischung i) entstanden ist, bevorzugt eine homogene Mischung i); wobei das Vermischen bevorzugt bei einer Schergeschwindigkeit von 12m/s bis 18m/s erfolgt, weiter bevorzugt von 14m/s bis 16m/s; und/oder wobei das Vermischen bevorzugt für 10 bis 30 Minuten erfolgt, weiter bevorzugt für 20 Minuten;
ii) Zugeben eines mindestens einen Füllstoffs gemäß Bestandteil 7 zu der Mischung i) und Dispergieren des mindestens einen Füllstoffs in der Mischung i) bis eine Dispersion ii) entstanden ist; wobei das Dispergieren bevorzugt bei hoher Schergeschwindigkeit erfolgt, weiter bevorzugt bei hoher Schergeschwindigkeit von 19m/s bis 26m/s, besonders bevorzugt bei 21m/s bis 24m/s; und/oder wobei das Dispergieren bevorzugt für 10 bis 30 Minuten erfolgt, weiter bevorzugt für 20 Minuten; und/oder wobei die Temperatur der Mischung i) beim Dispergieren bevorzugt von 40°C bis 70°C beträgt, weiter bevorzugt von 50°C bis 65°C;
iii) Zugeben eines mindestens einen Typ I Photoinitiators gemäß Bestandteil 3 zu der Dispersion ii) unter Rühren bis ein Gemisch iii) entstanden ist; wobei das Rühren bevorzugt bei einer Schergeschwindigkeit von 12m/s bis 16m/s erfolgt, weiter bevorzugt bei 14 m/s; und/oder wobei das Rühren bevorzugt für 5 bis 30 Minuten erfolgt, weiter bevorzugt für 10 bis 20 Minuten;
iv) Zugeben eines mindestens einen Farbwechsel-Indikators gemäß Bestandteil 4 zu dem Gemisch iii) unter Rühren bis ein Gemisch iv) entstanden ist; wobei das Rühren bevorzugt bei einer Schergeschwindigkeit von 12m/s bis 16m/s erfolgt, weiter bevorzugt bei 14 m/s; und/oder wobei das Rühren bevorzugt für 1 bis 10 Minuten erfolgt, weiter bevorzugt für 4 bis 6 Minuten; und
v) Entlüften des Gemischs iv) unter Vakuum und Rühren; wobei das Rühren bevorzugt bei einer Schergeschwindigkeit von 12m/s bis 18m/s erfolgt, weiter bevorzugt von 14 m/s bis 16 m/s; und/oder wobei das Rühren bevorzugt für 20 bis 40 Minuten erfolgt, weiter bevorzugt für 25 bis 35 Minuten.

Die Schritte des erfindungsgemäßen Herstellungsverfahrens werden im Folgenden auch als Herstellungsschritte bezeichnet. Während des Vermischens der Bestandteile in Herstellungsschritt i) kann die Temperatur der Mischung i) steigen. Dabei ist eine Temperatur von maximal 60°C nicht zu übersteigen.

Während der Herstellungsschritte i) bis iv) werden die verschiedenen Bestandteile der erfindungsgemäßen Zusammensetzung miteinander vermischt, dispergiert und gerührt, wobei Luft in die Zusammensetzung eingetragen wird. Der darin enthaltene Sauerstoff wirkt sich nachteilig auf die später auszuführende radikalische Polymerisierung der Zusammensetzung aus. Daher wird das Gemisch iv) in Herstellungsschritt v) entlüftet; dabei wird der Zusammensetzung auch der Sauerstoff entzogen. Das dazu hergestellte Vakuum liegt bevorzugt bei einem Druck von kleiner 1 bar, weiter bevorzugt bei einem Druck von 0,5bar bis 0,9bar. Das Entlüften sorgt außerdem vorteilhafterweise dafür, dass sich in der entstehenden Beschichtung bzw. dem entstehenden Polymernetzwerk keine Gaseinschlüsse bilden. Gaseinschlüsse in der entstandenen Beschichtung bzw. dem entstandenen Polymernetzwerk sind von Nachteil, da sie Poren in dieser ausbilden, welche als Fehlstellen wirken und nachträglich repariert werden müssten.

Bevorzugt umfasst in dem erfindungsgemäßen Herstellungsverfahren und der erfindungsgemäßen, mit UV-Licht härtbaren Zusammensetzung der mindestens eine Typ I Photoinitiator zwei oder mehr verschiedene Typ I Photoinitiatoren, wobei weiter bevorzugt zwei oder mehr verschiedene Typ I Photoinitiatoren in einander gelöst werden bevor sie gemäß Schritt iii) zu der Dispersion ii) gegeben werden, und/oder wobei die Temperatur der zwei oder mehr verschiedenen Typ I Photoinitiatoren beim Ineinander-Lösen bevorzugt 30°C bis 50°C beträgt, weiter bevorzugt 40°C, und/oder wobei das Ineinander-Lösen bevorzugt über Nacht erfolgt, besonders bevorzugt für 16 Stunden.

Die zwei oder mehr verschiedenen Typ I Photoinitiatoren sind bevorzugt ausgewählt aus der Gruppe enthaltend α-Hydroxy-Arylketon, Acylphosphinoxid und Acylphosphinat, weiter bevorzugt 2-Hydroxy-2-methyl-1-phenylpropanon, Ethyl (2,4,6-trimethylbenzoyl) phenylphosphinat und Phenylbis (2,4,6-trimethylbenzoyl) phosphinoxid; besonders bevorzugt Ethyl (2,4,6-trimethylbenzoyl) phenylphosphinat und Phenylbis (2,4,6-trimethylbenzoyl)-phosphinoxid. Die Typ I Photoinitiatoren Ethyl (2,4,6-trimethylbenzoyl) phenylphosphinat und Phenylbis (2,4,6-trimethylbenzoyl)-phosphinoxid sind für das Ineinander-Lösen besonders gut geeignet, da Phenylbis (2,4,6-trimethylbenzoyl)-phosphinoxid gut löslich ist in Ethyl (2,4,6-trimethylbenzoyl) phenylphosphinat. Bevorzugt macht die Lösung von Phenylbis (2,4,6-trimethylbenzoyl)-phosphinoxid in Ethyl (2,4,6-trimethylbenzoyl)-phenylphosphinat einen Gehalt von 2Gew.-% bis 5Gew.-% in der erfindungsgemäßen, mit UV-Licht härtbaren Zusammensetzung aus, weiter bevorzugt von 3Gew.-% bis 4Gew.-%. Besonders bevorzugt liegen Ethyl (2,4,6-trimethylbenzoyl) phenylphosphinat und Phenylbis (2,4,6-trimethylbenzoyl)-phosphinoxid in einem Verhältnis von 24 : 1 zueinander vor. Dabei handelt es sich um ein Gewichtsverhältnis. Während Schritt iii) des erfindungsgemäßen Herstellungsverfahrens wird die Lösung von Phenylbis (2,4,6-trimethylbenzoyl)-phosphinoxid in Ethyl (2,4,6-trimethylbenzoyl)-phenylphosphinat bevorzugt im Bereich dieses Gehalts zugegeben, besonders bevorzugt in dem genannten Verhältnis.

Weiter bevorzugt weist die erfindungsgemäße, mit UV-Licht härtbare Zusammensetzung den Typ I Photoinitiator 2-Hydroxy-2-methyl-1-phenylpropanon in dem Gehalt von 0,1Gew.-% bis 1,0Gew.-% auf, noch weiter bevorzugt von 0,2Gew.-% bis 0,6Gew.-%. Während Schritt iii) des erfindungsgemäßen Herstellungsverfahrens kann der Typ I Photoinitiator 2-Hydroxy-2-methyl-1-phenylpropanon im Bereich dieses Gehalts zugegeben werden.

In einem dritten Aspekt betrifft die Erfindung eine Verwendung der erfindungsgemäßen, mit UV-Licht härtbaren Zusammensetzung als Beschichtungsmasse, bevorzugt als Spachtelmasse; wobei die mit UV-Licht härtbare Zusammensetzung bevorzugt zum Beschichten von Oberflächen verwendet wird; und/oder wobei die mit UV-Licht härtbare Zusammensetzung weiter bevorzugt durch Spachteln auf eine Oberfläche aufgetragen wird. Da die mit UV-Licht härtbare Zusammensetzung bevorzugt zum Beschichten von Oberflächen verwendet wird, wird sie auch als Beschichtungsmasse bezeichnet. Da die mit UV-Licht härtbare Zusammensetzung weiter bevorzugt durch Spachteln auf eine Oberfläche aufgetragen wird und die dazu geeignete Konsistenz aufweist, wird sie auch als Spachtelmasse bezeichnet.

Die Erfindung betrifft weiter eine Verwendung der erfindungsgemäßen, mit UV-Licht härtbaren Zusammensetzung zum Beschichten von Oberflächen. Die Oberflächen sind bevorzugt aus der Gruppe ausgewählt von Oberflächen von Kunststoffen, Oberflächen von glasfaser-verstärkten Kunststoffen (GFK), Oberflächen von kohlenstofffaser-verstärkten Kunststoffen (CFK), Oberflächen von Rotorblättern von Windkraftanlagen, Oberflächen von Metallen und Oberflächen von Holz; weiter bevorzugt von Oberflächen von Kunststoffen, Oberflächen von glasfaser-verstärkten Kunststoffen, Oberflächen von kohlenstofffaser-verstärkten Kunststoffen, Oberflächen von Rotorblättern von Windkraftanlagen und Oberflächen von Metallen; besonders bevorzugt von Oberflächen von glasfaser-verstärkten Kunststoffen und Oberflächen von kohlenstofffaser-verstärkten Kunststoffen und Oberflächen von Rotorblättern von Windkraftanlagen. Rotorblätter von Windkraftanlagen enthalten allgemein glasfaser-verstärkte Kunststoffe und kohlenstofffaser-verstärkte Kunststoffe. Es hat sich überraschend herausgestellt, dass die erfindungsgemäße, mit UV-Licht härtbare Zusammensetzung nach dem Beschichten einer Oberfläche und Aushärten darauf eine sehr gute Haftung auf dieser Oberfläche hat. Dies gilt in besonderem Maße für die genannten Kunststoff- und Metall-Oberflächen. Darüber hinaus weist die erfindungsgemäße, mit UV-Licht härtbare Zusammensetzung auch eine hohe Haftfestigkeit zu weiteren auf sie aufgetragenen Schichten auf.

Die erfindungsgemäße, mit UV-Licht härtbare Zusammensetzung wird bevorzugt im Bereich des Baus und der Reparatur von Windkraftanlagen, dem Automobilbau und dem Yachtbau verwendet; besonders bevorzugt zum werksseitigen Beschichten und/oder zur Reparatur von Rotorblättern von Windkraftanlagen. Dies ist einerseits der hohen Haftfestigkeit der Zusammensetzung auf den oben genannten Oberflächenmaterialien und zu weiteren Beschichtungen zuzuschreiben. Andererseits erfüllt eine Beschichtung mit der erfindungsgemäßen, mit UV-Licht härtbaren Zusammensetzung weitere Anforderungen, wie eine geeignete Viskosität, leicht und gleichmäßig auftragbar auf Oberflächen, eine lange Topf- und Verarbeitungszeit, ein kurzer Zeitraum zum Aushärten und bis die Beschichtung überarbeitet oder weiter beschichtet werden kann, eine hohe Schichtdicke bis zu 5mm ist möglich, keine Einschlüsse von Lösemitteln, sehr stabil gegen Witterungseinflüsse und Alterung; die für die oben genannten Verwendungsbereiche wichtig sind. In Bezug auf Witterung bzw. Alterung sind Faktoren von Bedeutung, wie Resistenz gegen hohe Feuchtigkeit, Niederschläge, Sonnenlicht, speziell der UV-Anteil; Temperaturschwankungen. Beschichtungen mit der erfindungsgemäßen, mit UV-Licht härtbaren Zusammensetzung zeigen unter entsprechenden Prüfbedingungen (DIN EN 13523-27, DIN EN ISO 6270-2, DIN EN ISO 16474-3, DIN EN ISO 16474-3, ASTM 4587-5, DIN EN ISO 16474-2) hohe Haftfestigkeiten auf der beschichteten Oberfläche, keine Bildung von Blasen oder Rissen und kein Abblättern.

In einem vierten Aspekt betrifft die Erfindung ein Verfahren zum Beschichten einer Oberfläche, wobei das Verfahren die Schritte enthält:
I) Bereitstellen einer erfindungsgemäßen, mit UV-Licht härtbaren Zusammensetzung;
II) Auftragen der Zusammensetzung auf die Oberfläche, bevorzugt durch Spachteln; bis eine farbige Schicht der Zusammensetzung auf der Oberfläche entstanden ist;
III) Behandeln der farbigen Schicht mit UV-Strahlung, bevorzugt mit einem UV-Handgerät, noch bevorzugter mit einem LED-UV-Handgerät; zum Aushärten der Zusammensetzung bis ein Farbumschlag der farbigen Schicht zu vollständig farblos eingetreten ist und damit das Entstehen einer ausgehärteten Schicht, bevorzugt einer vollständig ausgehärteten Schicht, anzeigt;
IV) optional Überarbeiten der ausgehärteten Schicht, bevorzugt durch Schleifen;
V) optional Wiederholen der Schritte II) bis IV) bis mindestens eine weitere ausgehärtete Schicht entstanden ist;
VI) optional weiteres Überarbeiten und Aufbringen weiterer Schichten, wobei die weiteren Schichten von den ausgehärteten Schichten der vorhergehenden Schritte verschieden sind, und/oder wobei die weiteren Schichten bevorzugt ausgewählt sind aus Lacken, Lacken auf Wasserbasis, Dispersionsfarbe, Decklack und Leading Edge Protection.

Die erfindungsgemäße Verwendung kann dieselben Verfahrensschritte umfassen, die hierin für das Verfahren näher erläutert sind. Weitere Merkmale der Verwendung sind an anderer Stelle hierin definiert.

Die Schritte des erfindungsgemäßen Beschichtungsverfahrens werden bevorzugt in der angegebenen Reihenfolge durchgeführt. Die Schritte des erfindungsgemäßen Beschichtungsverfahrens werden im Folgenden auch als Beschichtungsschritte bezeichnet. Als Beschichtungszyklus wird im Sinne der vorliegenden Erfindung eine Abfolge von Beschichtungsschritten verstanden, die Schritte I) bis IV) umfasst oder einen Schritt des Bereitstellens einer Beschichtungsmasse, z.B. der erfindungsgemäßen, mit UV-Licht härtbaren Zusammensetzung; einen Schritt des Auftragens der Beschichtungsmasse auf eine Oberfläche; einen Schritt des Behandelns der aufgetragenen Schicht mit UV-Strahlung, und optional einen Schritt des Überarbeitens der mit UV-Strahlung behandelten Schicht.

Zwischen den Beschichtungsschritten I) und II) können optional weitere Schritte eingefügt werden, wie z.B.
I.I) optional Rühren der Zusammensetzung.

Das Durchführen eines solchen optionalen Beschichtungsschritts kann vorteilhaft sein, wenn die erfindungsgemäße, mit UV-Licht härtbare Zusammensetzung längere Zeit gelagert wurde bevor sie für eine Beschichtung eingesetzt wird.

In Beschichtungsschritt III) wird die farbige Schicht der mit UV-Licht härtbaren Zusammensetzung mit UV-Strahlung behandelt. Bevorzugt wird UV-Strahlung im Wellenlängenbereich von 200nm bis 405nm verwendet. In diesem Wellenlängenbereich wird eine gute und schnelle Aushärtung der Zusammensetzung erreicht. Als UV-Strahlungsquellen können Quecksilberdampflampen oder LED-UV-Strahler eingesetzt werden. Quecksilberdampflampen emittieren UV-Strahlung im Wellenlängenbereich von 200nm bis 400nm, LED-UV-Strahler von 365nm bis 405nm. Als vorteilhaft hat es sich erwiesen, die genannten UV-Strahlungsquellen in der Ausführung von Handgeräten, also UV-Handgeräten, einzusetzen. Diese können sowohl für die Behandlung großer Oberflächen als auch für die Behandlung sehr unregelmäßig geformter Oberflächen eingesetzt werden, da mit ihrer Hilfe UV-Strahlung auch auf anderweitig schwer erreichbare Strukturen optimal appliziert werden kann. Auch sind diese Handgeräte sehr einfach in der Handhabung. Besonders vorteilhaft sind LED-UV-Handgeräte, die auf energiesparende Weise UV-Strahlung mit hoher Energiedichte zur Verfügung stellen und so zu einer schnellen und gleichmäßigen Aushärtung der erfindungsgemäßen Zusammensetzung beitragen.

In Beschichtungsschritt III) kann die Leistung des UV-Handgeräts bevorzugt von 10% bis 100% betragen, weiter bevorzugt von 40% bis 100%, am bevorzugtesten von 50% bis 90%.

In einem optionalen Beschichtungsschritt IV) kann die in Beschichtungsschritt III) ausgehärtete Schicht der erfindungsgemäßen Zusammensetzung überarbeitet werden. Bevorzugt beinhaltet das Überarbeiten das Schleifen der ausgehärteten Schicht. Das Schleifen trägt dazu bei, dass eine nachfolgend aufgetragene weitere Schicht eine gute Haftung auf der vorhergehenden Schicht entwickelt.

In dem erfindungsgemäßen Verfahren ist es jedoch auch möglich, eine weitere Schicht der erfindungsgemäßen Zusammensetzung gemäß optionalem Beschichtungsschritt V) oder eine andere strahlenhärtbare Beschichtungsmasse gemäß optionalem Beschichtungsschritt VI), z.B. einen strahlenhärtbaren Lack, auf die bereits ausgehärtete Schicht aufzutragen ohne vorheriges Überarbeiten der bereits ausgehärteten Schicht. Der optionale Beschichtungsschritt V) kann einmalig oder mehrmalig durchgeführt werden, so dass eine weitere Schicht oder mehrere weitere Schichten der erfindungsgemäßen Zusammensetzung auf die bereits ausgehärtete Schicht aufgetragen werden können. Das Auftragen einer jeden weiteren Schicht kann jeweils ohne vorheriges Überarbeiten der jeweiligen vorhergehenden Schicht erfolgen. Der Beschichtungsschritt des Überarbeitens der bereits ausgehärteten Schicht kann so entfallen, was vorteilhafterweise Arbeitsaufwand und Arbeitszeit einspart. So können Prozesszeiten in der Produktion und der Reparatur beschichteter Produkte massiv verkürzt werden, was vorteilhaft ist.

In einer weiteren Ausführungsform des erfindungsgemäßen Verfahrens kann die Leistung des UV-Handgeräts bzw. die Lampenleistung der UV-Strahlungsquelle in Beschichtungsschritt III) bevorzugt reduziert werden, z.B. auf 40% bis 60%, weiter bevorzugt auf 50%. Die Aushärtung der ausgehärteten Schicht in Beschichtungsschritt III) erfolgt dann nicht vollständig, d.h. die Vernetzung der ausgehärteten Schicht ist dann nicht vollständig. Nach dem optionalen Auftragen einer weiteren Schicht und bei deren Aushärten durch Behandeln mit UV-Strahlung härten die nicht vollständig ausgehärtete Schicht aus Beschichtungsschritt III) und die weitere Schicht gemeinsam aus, was überraschenderweise zu einer ausgezeichneten Haftfestigkeit der beiden Schichten zueinander führt.

Grundsätzlich ist es mit dem erfindungsgemäßen Verfahren jedoch nicht erforderlich, mehr als eine Schicht der erfindungsgemäßen Zusammensetzung auf eine Oberfläche aufzutragen, um diese zu beschichten. Denn mit der erfindungsgemäßen Zusammensetzung und dem erfindungsgemäßen Verfahren können hohe Schichtdicken bis zu 5mm mit einem einzelnen Beschichtungszyklus erreicht werden, was für die meisten Anwendungen mehr als ausreichend ist. Auch dies spart vorteilhafterweise Arbeitsaufwand und Arbeitszeit ein.

In einem optionalen Beschichtungsschritt VI) können weitere Schichten auf die bereits gemäß Beschichtungsschritten I) bis V) aufgebrachte Schicht bzw. aufgebrachten Schichten aufgebracht werden, wobei die weiteren Schichten von der ausgehärteten Schicht bzw. den ausgehärteten Schichten der vorhergehenden Schritte verschieden sind. Die weiteren Schichten können eine Schicht oder mehrere Schichten sein. Bevorzugt sind die weiteren Schichten ausgewählt aus Lacken, Lacken auf Wasserbasis, Dispersionsfarbe, Decklack und Leading Edge Protection (LEP). LEP-Lacke sind vor allem im Bau und der Reparatur von Rotorblättern von Windkraftanlagen wichtig. LEP-Lacke werden auf die Kanten der Rotorblätter aufgetragen, um sie gegen die erosiven Einflüsse von Scherkräften und Witterung zu schützen.

In dem erfindungsgemäßen Beschichtungsverfahren erfolgt das Aushärten der Zusammensetzung in Beschichtungsschritt III) in einem Wirkungsbereich der UV-Strahlung bevorzugt innerhalb von Sekunden, weiter bevorzugt innerhalb von mindestens 20 Sekunden, noch weiter bevorzugt innerhalb von 20 Sekunden bis 5 Minuten, bevorzugter von 20 Sekunden bis 2 Minuten, besonders bevorzugt von 20 Sekunden bis 90 Sekunden. Direkt danach kann die ausgehärtete Schicht ggfs. überarbeitet werden gemäß Beschichtungsschritt IV) und/oder mit einer weiteren Schicht gemäß Beschichtungsschritten V) und/oder VI) versehen werden. Eine handelsübliche Beschichtungsmasse oder Spachtelmasse benötigt mindestens 30 Minuten zum Aushärten und bevor die Schicht dieser Masse überarbeitet, z.B. geschliffen, oder mit einer weiteren Schicht beschichtet werden kann. Dadurch entstehen in der Produktion und in der Reparatur von beschichteten Produkten nachteilig lange Standzeiten bzw. Wartezeiten. Die erfindungsgemäße, mit UV-Licht härtbare Zusammensetzung und das erfindungsgemäße Beschichtungsverfahren bieten demgegenüber einen deutlichen Zeitvorteil.

In dem erfindungsgemäßen Beschichtungsverfahren wird bevorzugt keine Schicht eines granulären Materials auf aufgebrachte Schichten aufgetragen, insbesondere nicht nach den Beschichtungsschritten II), III), IV) und/oder V).

In dem erfindungsgemäßen Beschichtungsverfahren ist die Oberfläche bevorzugt aus der Gruppe ausgewählt von Oberflächen von Oberflächen von Kunststoffen, glasfaser-verstärkten Kunststoffen (GFK), Oberflächen von kohlenstofffaser-verstärkten Kunststoffen (CFK), Oberflächen von Rotorblättern von Windkraftanlagen, Oberflächen von Metallen und Oberflächen von Holz; weiter bevorzugt von Oberflächen von Kunststoffen, Oberflächen von glasfaser-verstärkten Kunststoffen, Oberflächen von kohlenstofffaser-verstärkten Kunststoffen, Oberflächen von Rotorblättern von Windkraftanlagen und Oberflächen von Metallen; besonders bevorzugt von Oberflächen von glasfaser-verstärkten Kunststoffen, Oberflächen von kohlenstofffaser-verstärkten Kunststoffen und Oberflächen von Rotorblättern von Windkraftanlagen. Rotorblätter von Windkraftanlagen enthalten allgemein glasfaser-verstärkte Kunststoffe und kohlenstofffaser-verstärkte Kunststoffe.

In einem fünften Aspekt betrifft die Erfindung ein beschichtetes Produkt, wobei das beschichtete Produkt eine Oberfläche enthält und eine darauf aufliegende ausgehärtete Schicht der erfindungsgemäßen, mit UV-Licht härtbaren Zusammensetzung, und/oder wobei die ausgehärtete Schicht eine Schichtdicke von bis zu 5mm aufweist; und/oder wobei die Oberfläche bevorzugt aus der Gruppe ausgewählt ist von Oberflächen von Kunststoffen, Oberflächen von glasfaser-verstärkten Kunststoffen (GFK), Oberflächen von kohlenstofffaser-verstärkten Kunststoffen (CFK), Oberflächen von Rotorblättern von Windkraftanlagen, Oberflächen von Metallen und Oberflächen von Holz; und/oder wobei das beschichtete Produkt bevorzugt nach dem erfindungsgemäßen Beschichtungsverfahren hergestellt wurde. Bevorzugt handelt es sich bei der ausgehärteten Schicht um eine in einem einzelnen Beschichtungszyklus aufgebrachte Schicht. Weiter bevorzugt weist die ausgehärtete Schicht eine Schichtdicke von 1µm bis 5mm, noch weiter bevorzugt von 80µm bis 5mm, stärker bevorzugt von 0,2 bis 5mm, noch stärker bevorzugt von 0,5mm bis 5mm, bevorzugter von 1mm bis 5mm, noch bevorzugter von größer 1mm bis gleich 5mm, weiter bevorzugter von 2mm bis 5mm, noch weiter bevorzugter von größer 2mm bis gleich 5mm, am bevorzugtesten von 3mm bis 5mm auf. Bevorzugt handelt es sich bei dem Produkt bzw. der Oberfläche um einen Formkörper. Bevorzugt handelt es sich bei dem Produkt bzw. der Oberfläche nicht um einen Film.

### Beispiele

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

### 1. Zusammensetzung zum Beschichten von Oberflächen

Folgende erfindungsgemäße Zusammensetzung wurde als Spachtelmasse zum Beschichten verschiedener Oberflächen in den folgenden Beispielen verwendet:

| Bestandteile | | Menge / Gew.-% |
|---|---|---|
| 1a | Miramer DP 408 | 27 - 29% |
| 1b | Miramer UA 5216 | 26 - 28 |
| 2 | MIRAMER ES4420NT | 16 - 17 |
| 5 | Miramer M122 | 11 - 13 |
| 6 | Miramer SC 1400 | 5 - 7 |
| 7 | Talkum Mistron-Monomix G | 5 - 6 |
| 7 | Aerosil 300 | 5 - 6 |
| 3 | Omnirad 1173 | 0,2 - 0,6 |
| 3 | Lucirin TPO-L / Keycure PI-981 (24:1) | 3 - 4 |
| 4 | CR234-BT2B oder CR236 (UV Indikator) | 0,05 - 1 % |

Die Zusammensetzung wurde entsprechend des erfindungsgemäßen Verfahrens hergestellt (Herstellungsverfahren) und wurde entsprechend des erfindungsgemäßen Verfahrens (Beschichtungsverfahren) zum Beschichten einer Oberfläche eingesetzt.

### 2. Bestimmung der Haftfestigkeit

Nach dem eine Oberfläche mit der in Beispiel 1 angegebenen erfindungsgemäßen Zusammensetzung beschichtet und ausgehärtet wurde, wurde zur Bestimmung der Haftfestigkeit der Schicht der Zusammensetzung auf der Oberfläche ein Abreißversuch in Anlehnung an DIN EN ISO 4624:2016 durchgeführt. Dazu wurden runde Prüfstempel (Aluminium-Prüfstempel, Durchmesser 2cm) auf die entstandene Beschichtung mit Hilfe des Klebstoffs Loctite EA 3423 A&B Hysol geklebt. Frühestens 24 Stunden später wurden die Stempel mit einer Lastzunahme von 0,2MPa/s unter Verwendung des Prüfgeräts PosiTest AT-A der Fa. DeFelsko abgezogen, während die Kraft, die für das Entfernen eines Stempels benötigt wird, gemessen wurde. Diese Kraft ist ein Maß für die Haftfestigkeit der Beschichtung auf der beschichteten Oberfläche. Je mehr dieser Kraft aufgewendet werden muss, um einen Stempel zu entfernen, desto höher ist die Haftfestigkeit der Beschichtung auf der Oberfläche.

Zudem wurde die Haftfestigkeit anhand des Bruchbilds beurteilt, das sich nach dem Abziehen des Stempels ergab. Nach dem Aufkleben eines Stempels erhielt man den folgenden Beschichtungsaufbau: (A) Material der Oberfläche, (B) Schicht der erfindungsgemäßen Zusammensetzung (Spachtelmasse), (Y) Schicht des Klebstoffs, (Z) Prüfstempel. Nach dem Abziehen des Prüfstempels können Teile oder die gesamte Schicht des Klebstoffs an der Stempelfläche hängen geblieben sein, Teile oder die gesamte Schicht der Spachtelmasse, oder Teile oder eine durchgehende Schicht des Materials der Oberfläche.

### 3. Beschichtung einer Kunststoffoberfläche mit der erfindungsgemäßen Zusammensetzung

Als Kunststoffoberfläche wurde eine glaserfaser-verstärkte Kunststoffplatte mit Polyesterinfusionsharz verwendet. Die Platte wurde gereinigt und mit Hilfe eines Spachtels wurde eine 2mm dicke Schicht der Spachtelmasse (siehe Beispiel 1) auf eine Fläche von etwa 7 cm x 55 cm aufgetragen. Die Schicht der Spachtelmasse wurde für 60 Sekunden mit einer LED-UV-Handlampe behandelt zum Härten. Dabei war die Leistung der LED-UV-Handlampe auf 90% eingestellt. Bei 100% Leistung hat die LED-UV-Handlampe eine Leistung von 30W. Es entstand eine farblose, feste, gleichmäßig dicke, ebene und trockene, klebfreie Schicht. Nach dem Aushärten betrug die Dicke der entstandenen Beschichtung 2mm; es trat als keine Schrumpfung der Schicht durch das Aushärten ein.

Nach dem Aushärten wurden vier der Prüfstempel auf die entstandene Beschichtung geklebt. 72 Stunden später wurden die Stempel abgezogen, während die Kraft, die für das Entfernen eines Stempels benötigt wird, gemessen wurde, wie in Beispiel 2 beschrieben. Die für die einzelnen Stempel erhaltenen Haftfestigkeiten und Bruchbilder sind in Tabelle 1 zusammengefasst.

**Tabelle 1**

| Stempel | Haftfestigkeit / MPa | A / % |
|---|---|---|
| 1 | 4,26 | 100 |
| 2 | 4,26 | 100 |
| 3 | 4,49 | 100 |
| 4 | 6,74 | 100 |

Alle Bruchbilder zeigen einen Kohäsionsbruch im Material der Kunststoffplatte (A). D.h. an jedem Stempel blieb die gesamte Schicht des Klebstoffs hängen, die gesamte Schicht der Spachtelmasse und eine durchgehende Schicht des Materials der Oberfläche. Die Haftfestigkeit der Spachtelmasse war also so groß, dass sich die Schicht der Spachtelmasse gar nicht von der Oberfläche der Kunststoffplatte entfernen ließ. Stattdessen brach die Schicht der Kunststoffplatte parallel zur Schichtebene. Für diesen Bruch war die in Tabelle 1 aufgeführte Kraft notwendig. Die Haftfestigkeit der Spachtelmasse auf der Oberfläche der Kunststoffplatte war also deutlich höher als 4 bis 6 MPa, was eine sehr gute Haftfestigkeit darstellt.

### 4. Beschichtung einer Kunststoffoberfläche mit der erfindungsgemäßen Zusammensetzung

Als Kunststoffoberfläche wurden zwei glaserfaser-verstärkte Kunststoffplatten mit Epoxyinfusionsharz verwendet. Die Platten wurden gereinigt und mit Hilfe eines Spachtels wurde jeweils eine 2mm dicke Schicht der Spachtelmasse (siehe Beispiel 1) auf die Oberflächen der Platten aufgetragen. Auf Kunststoffplatte 1 wurde die Schicht der Spachtelmasse wurde für 30 Sekunden mit einer LED-UV-Handlampe behandelt zum Härten, auf Kunststoffplatte 2 für 40 Sekunden. Dabei war die Leistung der LED-UV-Handlampe auf 90% eingestellt. Es entstanden farblose, feste, gleichmäßig dicke, ebene und trockene, klebfreie Schichten. Nach dem Aushärten betrug die Dicke der entstandenen Beschichtung 2mm; es trat also keine Schrumpfung der Schichten durch das Aushärten ein.

Nach dem Aushärten wurden zur Bestimmung der Haftfestigkeit der Schicht der Spachtelmasse auf den Kunststoffplatten jeweils zwei der Prüfstempel auf die entstandene Beschichtung geklebt. 24 Stunden später wurden die Stempel abgezogen und so die Haftfestigkeit bestimmt, wie in Beispiel 2 beschrieben. Die für die einzelnen Stempel erhaltenen Haftfestigkeiten und Bruchbilder sind in Tabelle 2 zusammengefasst.

**Tabelle 2**

| | Haftfestigkeit / MPa | A/B / % | B / % | Y / % |
|---|---|---|---|---|
| Kunststoffplatte 1: | | | | |
| Stempel 1 | 13,43 | 100 | -- | -- |
| Stempel 2 | 12,94 | 100 | -- | -- |

| Kunststoffplatte 2: | | | | |
|---|---|---|---|---|
| Stempel 3 | 13,25 | 100 | -- | -- |
| Stempel 4 | 15,24 | -- | 10 | 90 |

Die entstandene erfindungsgemäße Beschichtung wies eine außerordentlich gute Haftfestigkeit von mehr als 12 MPa auf der Oberfläche der glaserfaser-verstärkten Kunststoffplatten auf. Die Bruchbilder der Stempel 1 bis 3 zeigten einen Adhäsionsbruch zwischen dem Material der Kunststoffplatte (A) und der Beschichtung mit Spachtelmasse (B) (Spalte A/B in Tabelle 2), d.h. an den Stempeln blieben die gesamte Schicht des Klebstoffs (Y) und die gesamte Schicht der Spachtelmasse (B) hängen. Die erfindungsgemäße Spachtelmasse hatte also eine Haftfestigkeit von mehr als 12MPa zur Oberfläche der glaserfaser-verstärkten Kunststoffplatten, was eine außerordentlich gute Haftfestigkeit ist.

Das Bruchbild des Stempels 4 zeigte zu 10% einen Kohäsionsbruch im Material der Beschichtung mit Spachtelmasse (B) (Spalte B in Tabelle 2) zu 10% einen Kohäsionsbruch im Material des Klebstoffs (Y) (Spalte Y in Tabelle 2). An dem Stempel blieben also ein großer Teil der Schicht des Klebstoffs (Y) hängen und ein sehr kleiner Teil der Schicht der Spachtelmasse (B). Die erfindungsgemäße Spachtelmasse hatte also eine so gute Haftfestigkeit zur Oberfläche der glaserfaser-verstärkten Kunststoffplatte, dass sie von der Kunststoffplatte so gut wie nicht entfernt werden konnte.

### 5. Beschichtung einer Kunststoffoberfläche mit der erfindungsgemäßen Zusammensetzung

Als Kunststoffoberfläche wurde eine Acrylnitril-Butadien-Styrol-Platte (ABS-Platte) verwendet. Die Oberfläche der Platte wurde angeschliffen und gereinigt. Mit Hilfe eines Spachtels wurde eine 2mm dicke Schicht der Spachtelmasse (siehe Beispiel 1) aufgetragen. Die Schicht der Spachtelmasse wurde für 20 Sekunden mit einer LED-UV-Handlampe behandelt zum Härten. Dabei war die Leistung der LED-UV-Handlampe auf 90% eingestellt. Es entstand eine farblose, feste, gleichmäßig dicke, ebene und trockene, klebfreie Schicht.

Nach dem Aushärten wurden zwei der Prüfstempel auf die entstandene Beschichtung geklebt. 24 Stunden später wurden die Stempel abgezogen und dabei die Haftfestigkeit der entstandenen Beschichtung gemessen, wie in Beispiel 2 beschrieben. Die erhaltenen Haftfestigkeiten und Bruchbilder sind in Tabelle 3 zusammengefasst.

**Tabelle 3**

| Stempel | Haftfestigkeit / MPa | A / % | A/B / % |
|---|---|---|---|
| 1 | 5,44 | -- | 100 |
| 2 | 5,56 | 100 | -- |

Die entstandene erfindungsgemäße Beschichtung wies eine sehr gute Haftfestigkeit von mehr als 5 MPa auf der Oberfläche der ABS-Platte auf. Stempel 1 zeigte einen Adhäsionsbruch zwischen dem Material der ABS-Platte (A) und der Beschichtung mit Spachtelmasse (B) (Spalte A/B in Tabelle 3), d.h. an Stempel 1 blieben die gesamte Schicht des Klebstoffs (Y) und die gesamte Schicht der Spachtelmasse (B) hängen. Die erfindungsgemäße Spachtelmasse hatte also eine Haftfestigkeit von mehr als 5MPa zur Oberfläche der ABS-Platte, was eine sehr gute Haftfestigkeit ist.

Stempel 2 zeigte zu 100% einen Kohäsionsbruch der ABS-Platte (A) (Spalte A in Tabelle 3), d.h. an Stempel 2 blieben die gesamte Schicht des Klebstoffs (Y), die gesamte Schicht der Spachtelmasse (B) und eine durchgehende Schicht des Materials der ABS-Platte (A) hängen. In dem Bereich der erfindungsgemäß beschichteten Oberfläche der ABS-Platte, die von Stempel 2 bedeckt wurde, hatte die erfindungsgemäße Spachtelmasse also eine so gute Haftfestigkeit zur Oberfläche der ABS-Platte, dass sie von der ABS-Platte nicht entfernt werden konnte. Anstatt dessen brach das Material der ABS-Platte parallel zur Schichtebene.

### 6. Beschichtung einer Metalloberfläche mit der erfindungsgemäßen Zusammensetzung

Als Metalloberflächen wurden ein sendzimirverzinktes Stahlblech, ein entfettetes Stahlblech, ein Stahlblech mit Zinkphosphatierung (26S/6800/OC) und ein chromatiertes, eloxiertes Aluminiumblech verwendet. Die Oberflächen der Metallbleche wurden gereinigt. Mit Hilfe eines Spachtels wurde eine 2mm dicke Schicht der Spachtelmasse (siehe Beispiel 1) aufgetragen. Die Schicht der Spachtelmasse wurde für 20 Sekunden mit einer LED-UV-Handlampe behandelt zum Härten. Dabei war die Leistung der LED-UV-Handlampe auf 90% eingestellt. Es entstanden farblose, feste, gleichmäßig dicke, ebene und trockene, klebfreie Schichten auf den Blechen.

Nach dem Aushärten wurde jeweils ein Prüfstempel auf die entstandene Beschichtung jedes Blechs geklebt. 24 Stunden später wurden die Stempel abgezogen und dabei die Haftfestigkeit der entstandenen Beschichtung bestimmt, wie in Beispiel 2 beschrieben. Die erhaltenen Haftfestigkeiten und Bruchbilder sind in Tabelle 4 zusammengefasst.

**Tabelle 4**

| Stempel | Blech | Haftfestigkeit / MPa | A/B / % | B / % | Y / % | Y/Z / % |
|---|---|---|---|---|---|---|
| 1 | sendzimirverzinktes Stahlblech | 12,40 | 20 | -- | 70 | 10 |
| 2 | entfettetes Stahlblech | 7,74 | 20 | -- | 80 | -- |
| 3 | Stahlblech mit Zinkphosphatierung | 12,94 | 40 | 60 | -- | -- |
| 4 | Aluminiumblech | 10,87 | 90 | 10 | -- | -- |

Die entstandenen erfindungsgemäßen Beschichtungen wiesen außerordentlich gute Haftfestigkeiten von teilweise mehr als 12 MPa auf der Oberfläche der Metallbleche auf. Stempel 1 zeigte zu 20% einen Adhäsionsbruch zwischen dem Material des sendzimirverzinkten Stahlblechs (A) und der Beschichtung mit Spachtelmasse (B) (Spalte A/B in Tabelle 4), zu 70% einen Adhäsionsbruch zwischen Klebstoff (Y) und der Beschichtung mit Spachtelmasse (B) (Spalte Y in Tabelle 4) und zu 10% einen Adhäsionsbruch zwischen dem Kleber (Y) und dem Prüfstempel (Z) (Spalte Y/Z in Tabelle 4). An Stempel 1 blieben also ein großer Teil des Klebstoffs (Y) und nur ein kleiner Teil der Schicht der Spachtelmasse (B) hängen. Ein großer Teil der erfindungsgemäßen Spachtelmasse hatte also eine so gute Haftfestigkeit zur Oberfläche des Stahlblechs, dass sie von dem sendzimirverzinkten Stahlblech nicht entfernt werden konnte.

Stempel 2 zeigte zu 20% einen Adhäsionsbruch zwischen dem Material des entfetteten Stahlblechs (A) und der Beschichtung mit Spachtelmasse (B) (Spalte A/B in Tabelle 4) und zu 80% einen Adhäsionsbruch zwischen Klebstoff (Y) und der Beschichtung mit Spachtelmasse (B) (Spalte Y in Tabelle 4). An Stempel 2 blieben also die gesamte Schicht des Klebstoffs (Y) und nur ein kleiner Teil der Schicht der Spachtelmasse (B) hängen. Ein großer Teil der erfindungsgemäßen Spachtelmasse hatte also eine so gute Haftfestigkeit zur Oberfläche des Stahlblechs, dass sie von dem entfetteten Stahlblech nicht entfernt werden konnte.

Stempel 3 zeigte zu 40% einen Adhäsionsbruch zwischen dem Material des zinkphosphatierten Stahlblechs (A) und der Beschichtung mit Spachtelmasse (B) (Spalte A/B in Tabelle 4) und zu 60% einen Kohäsionsbruch in der Beschichtung (B) (Spalte B in Tabelle 4). An Stempel 3 blieben also die gesamte Schicht des Klebstoffs (Y) und nur ein Teil der Schicht der Spachtelmasse (B) hängen. Der andere Teil der erfindungsgemäßen Spachtelmasse hatte also eine so gute Haftfestigkeit zur Oberfläche des Stahlblechs, dass sie von dem zinkphosphatierten Stahlblech nicht entfernt werden konnte.

Stempel 4 zeigte zu 90% einen Adhäsionsbruch zwischen dem Material des Aluminiumblechs (A) und der Beschichtung mit Spachtelmasse (B) (Spalte A/B in Tabelle 4) und zu 10% einen Kohäsionsbruch in der Beschichtung (B) (Spalte B in Tabelle 4). An Stempel 4 blieben also die gesamte Schicht des Klebstoffs (Y) und ein großer Teil der Schicht der Spachtelmasse (B) hängen. Um diesen großen Teil der Schicht der Spachtelmasse von der Oberfläche des Aluminiumblechs zu lösen, war allerdings eine Kraft von mehr als 10MPa erforderlich, so dass die Schicht der erfindungsgemäßen Spachtelmasse eine außerordentlich gute Haftfestigkeit zur Oberfläche des Aluminiumblechs hatte.

### 7. Aufbringen einer weiteren Schicht auf eine Beschichtung mit der erfindungsgemäßen Zusammensetzung

Auf glaserfaser-verstärkte Kunststoffplatten (GFK-Platten) wurden Beschichtungen mit der erfindungsgemäßen Zusammensetzung aufgebracht, wie in Beispiel 3 beschrieben. Dabei wurde die Beschichtung auf Kunststoffplatte 1 mit einer Dicke von ca. 2mm aufgebracht und auf Kunststoffplatte 2 mit einer Dicke von ca. 1mm. Es entstanden farblose, feste, gleichmäßig dicke, ebene und trockene, klebfreie Schichten auf den Platten.

Nach dem Aushärten wurden die entstandenen Beschichtungen angeschliffen, gereinigt und mit einer Schicht eines LEP-Lacks (LEP = Leading Edge Protection, Bergolin LEP 6D1100, RAL7035), wie er für den Kantenschutz auf Rotorblättern von Windkraftanlagen eingesetzt wird, überzogen.

Nach dem Aushärten des LEP-Lacks wurden auf Kunststoffplatte 1 zwei Prüfstempel auf den LEP-Lack geklebt und auf Kunststoffplatte 2 drei Prüfstempel. So erhielt man, abweichend von Beispiel 2, den folgenden Beschichtungsaufbau: (A) Material der Oberfläche, (B) Schicht der erfindungsgemäßen Zusammensetzung (Spachtelmasse), (C) Schicht des LEP-Lacks, (Y) Schicht des Klebstoffs, (Z) Prüfstempel. 24 Stunden nach dem Aufkleben der Stempel wurden diese abgezogen und dabei die Haftfestigkeit zwischen der entstandenen Beschichtung und dem LEP-Lack gemessen, wie in Beispiel 2 beschrieben. Die erhaltenen Haftfestigkeiten und Bruchbilder sind in Tabelle 5 zusammengefasst.

**Tabelle 5**

| Kunststoffplatte 1 | Haftfestigkeit / MPa | A/B / % | B/C / % | C / % |
|---|---|---|---|---|
| Stempel 1 | 12,86 | 100 | -- | -- |
| Stempel 2 | 13,07 | 100 | -- | -- |

| Kunststoffplatte 2 | | | | |
|---|---|---|---|---|
| Stempel 3 | 11,73 | 55 | 45 | -- |
| Stempel 4 | 9,29 | 10 | 40 | 50 |
| Stempel 5 | 12,84 | 100 | -- | -- |

Die entstandenen erfindungsgemäßen Beschichtungen wiesen außerordentlich gute Haftfestigkeiten von 9 MPa bis mehr als 13 MPa zu dem LEP-Lack auf. Stempel 1, 2 und 5 zeigten einen Adhäsionsbruch zwischen dem Material der GFK-Platten (A) und der Beschichtung mit Spachtelmasse (B) (Spalte A/B in Tabelle 5), d.h. an den Stempeln blieben die gesamte Schicht des Klebstoffs (Y), die gesamte Schicht des LEP-Lacks (C) und die gesamte Schicht der Spachtelmasse (B) hängen. Die erfindungsgemäße Spachtelmasse hatte also eine Haftfestigkeit von mehr als 12MPa zur Oberfläche der GFK-Platten. Ein Bruch zwischen der Schicht des LEP-Lacks und der Schicht der erfindungsgemäßen Spachtelmasse trat bei einer auf die Stempel einwirkenden Kraft von mehr als 12MPa nicht auf. Es lag also eine außerordentlich gute Haftfestigkeit zwischen der Schicht des LEP-Lacks und der Schicht der erfindungsgemäßen Spachtelmasse vor, wie auch zwischen der Oberfläche der GFK-Platten und der erfindungsgemäßen Spachtelmasse.

Stempel 3 zeigte zu 55% einen Adhäsionsbruch zwischen dem Material der GFK-Platte (A) und der Beschichtung mit Spachtelmasse (B) (Spalte A/B in Tabelle 5) und zu 45% einen Adhäsionsbruch zwischen der Beschichtung mit Spachtelmasse (B) und der Schicht des LEP-Lacks (C) (Spalte B/C in Tabelle 5). An Stempel 3 blieben also die gesamte Schicht des Klebstoffs (Y), die gesamte Schicht des LEP-Lacks (C) und ein Teil der Schicht der Spachtelmasse (B) hängen. Es blieb also etwa die Hälfte der Schicht der Spachtelmasse (B) am Material der GFK-Platte hängen und die andere Hälfte der Schicht der Spachtelmasse (B) an der Schicht des LEP-Lacks. Die Adhäsion der erfindungsgemäßen Spachtelmasse war zu dem Material der GFK-Platte und der Schicht des LEP-Lacks ähnlich hoch.

Stempel 4 zeigte zu 10% einen Adhäsionsbruch zwischen dem Material der GFK-Platte (A) und der Beschichtung mit Spachtelmasse (B) (Spalte A/B in Tabelle 5), zu 40% einen Adhäsionsbruch zwischen der Beschichtung mit Spachtelmasse (B) und der Schicht des LEP-Lacks (C) (Spalte B/C in Tabelle 5) und zu 50% einen Kohäsionsbruch in der Schicht des LEP-Lacks (Spalte C in Tabelle 5). An Stempel 4 blieben also die gesamte Schicht des Klebstoffs (Y), die gesamte Schicht des LEP-Lacks (C) und ein Teil der Schicht der Spachtelmasse (B) hängen. An etwa 50% der Schicht der Spachtelmasse blieb also die Verbindung zu der Schicht des LEP-Lacks bestehen. Damit war, wie bei Stempel 3, die Adhäsion der erfindungsgemäßen Spachtelmasse war zu dem Material der GFK-Platte und der Schicht des LEP-Lacks ähnlich hoch.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Eine mit UV-Licht härtbare Zusammensetzung, die folgende Bestandteile enthält
1) mindestens ein difunktionelles Urethan-Acrylat-Oligomer, bevorzugt aliphatisch, verdünnt mit einem Reaktiv-Verdünner, bevorzugt einem Acrylat-Monomer;
2) ein thiol-funktionalisiertes Acrylat-Oligomer;
3) mindestens einen Typ I Photoinitiator, welcher sich mit UV-Licht aktivieren lässt; und
4) mindestens einen Farbwechsel-Indikator, welcher bei Bestrahlung mit UV-Licht von farbig zu farblos wechselt.

2. Die Zusammensetzung gemäß Anspruch 1, wobei das mindestens eine difunktionelle Urethan-Acrylat-Oligomer gemäß Bestandteil 1 mindestens zwei difunktionelle Urethan-Acrylat-Oligomere umfasst ausgewählt aus:
1a) einem difunktionellen Urethan-Acrylat-Oligomer, bevorzugt aliphatisch, verdünnt mit einem difunktionellen Acrylat-Monomer, bevorzugt Dipropylenglykoldiacrylat, und
1b) einem difunktionellen Urethan-Acrylat-Oligomer, bevorzugt aliphatisch; verdünnt mit einem monofunktionellen Acrylat-Monomer, bevorzugt Isobornylacrylat,
wobei die Urethan-Acrylat-Oligomere gemäß Bestandteilen 1a und 1b bevorzugt verschieden voneinander sind.

3. Die Zusammensetzung gemäß einem der vorhergehenden Ansprüche, wobei der mindestens eine Typ I Photoinitiator gemäß Bestandteil 3 ausgewählt ist aus der Gruppe enthaltend α-Hydroxy-Arylketon, Acylphosphinoxid, Acylphosphinat und eine Mischung davon, bevorzugt 2-Hydroxy-2-methyl-1-phenylpropanon, Ethyl (2,4,6-trimethylbenzoyl) phenylphosphinat, Phenylbis (2,4,6-trimethylbenzoyl)-phosphin-oxid und eine Mischung davon.

4. Die Zusammensetzung gemäß einem der vorhergehenden Ansprüche, wobei der Farbwechsel-Indikator gemäß Bestandteil 4 ausgewählt ist aus der Gruppe enthaltend CR234-BT2B, CR234, CR234B1, CR234BT1, CR236, CR234-R33 und CR234-V4; weiter bevorzugt CR234-BT2B und CR236.

5. Die Zusammensetzung gemäß einem der vorhergehenden Ansprüche, wobei die Bestandteile die folgenden Gehalte in der Zusammensetzung aufweisen:
1a) das difunktionelle Urethan-Acrylat-Oligomer verdünnt mit einem difunktionellen Acrylat-Monomer: 20 bis 35%, bevorzugt 25 bis 30%, weiter bevorzugt 27 bis 29%, bezogen auf das Gesamtgewicht der Zusammensetzung; und/oder
1b) das difunktionelle Urethan-Acrylat-Oligomer verdünnt mit einem monofunktionellen Acrylat-Monomer: 20 bis 35%, bevorzugt 25 bis 30%, weiter bevorzugt 26 bis 28%, bezogen auf das Gesamtgewicht der Zusammensetzung; und/oder
2) das thiol-funktionalisierte Acrylat-Oligomer: 5 bis 20%, bevorzugt 10 bis 19%, weiter bevorzugt 16 bis 17%, und/oder;
3) der mindestens eine Typ I Photoinitiator oder die Summe aller Typ I Photoinitiatoren: 0,01 bis 10%; bevorzugt 0,1 bis 7%, weiter bevorzugt 0,1 bis 5%; und/oder
4) der mindestens eine Farbwechsel-Indikator oder die Summe aller Farbwechsel-Indikatoren: 0,01 bis 5%, bevorzugt 0,01 bis 2%, weiter bevorzugt 0,05 bis 1%; und/oder
5) der Acrylsäureester: 8 bis 20%, bevorzugt 10 bis 16%, weiter bevorzugt 11 bis 13%; und/oder
6) der Adhäsionspromotor: 1 bis 10%, bevorzugt 3 bis 9%, weiter bevorzugt 5 bis 7%; und/oder
7) der mindestens eine Füllstoff oder die Summe aller Füllstoffe: 1 bis 10%, bevorzugt 3 bis 8%, weiter bevorzugt 5 bis 6%; und
wobei die Gehalte der einzelnen Bestandteile so aufeinander abgestimmt sind, dass ihre Summe 100% beträgt.

6. Die Zusammensetzung gemäß einem der vorhergehenden Ansprüche, wobei die Zusammensetzung in einer Schichtdicke von bis zu 5mm, bevorzugt in einer Schichtdicke von 1µm bis 5mm, weiter bevorzugt von 80µm bis 5mm, stärker bevorzugt von 0,2mm bis 5mm, noch stärker bevorzugt von 0,5mm bis 5mm, bevorzugter von 1mm bis 5mm, noch bevorzugter von größer 1mm bis gleich 5mm, weiter bevorzugter von 2mm bis 5mm, noch weiter bevorzugter von größer 2mm bis gleich 5mm, am bevorzugtesten von 3mm bis 5mm, auf eine Oberfläche in einem einzelnen Beschichtungszyklus auftragbar und aushärtbar ist.

7. Ein Verfahren zur Herstellung einer Zusammensetzung gemäß einem der Ansprüche 1 - 6, wobei das Verfahren die Schritte enthält:
i) Vorlegen von Bestandteilen 1 bis 2, bevorzugt Bestandteilen 1a, 1b und 2; und optional Bestandteilen 5 und/oder 6 in einem Gefäß und Vermischen der Bestandteile bis eine Mischung i) entstanden ist, bevorzugt eine homogene Mischung i); wobei das Vermischen bevorzugt bei einer Schergeschwindigkeit von 12m/s bis 18m/s erfolgt, weiter bevorzugt von 14m/s bis16 m/s; und/oder wobei das Vermischen bevorzugt für 10 bis 30 Minuten erfolgt, weiter bevorzugt für 20 Minuten;
ii) Zugeben eines mindestens einen Füllstoffs gemäß Bestandteil 7 zu der Mischung i) und Dispergieren des mindestens einen Füllstoffs in der Mischung i) bis eine Dispersion ii) entstanden ist; wobei das Dispergieren bevorzugt bei hoher Schergeschwindigkeit erfolgt, weiter bevorzugt bei hoher Schergeschwindigkeit von 19m/s bis 26m/s, besonders bevorzugt bei 21m/s bis 24m/s; und/oder wobei das Dispergieren bevorzugt für 10 bis 30 Minuten erfolgt, weiter bevorzugt für 20 Minuten; und/oder wobei die Temperatur der Mischung i) beim Dispergieren bevorzugt von 40°C bis 70°C beträgt, weiter bevorzugt von 50°C bis 65°C;
iii) Zugeben eines mindestens einen Typ I Photoinitiators gemäß Bestandteil 3 zu der Dispersion ii) unter Rühren bis ein Gemisch iii) entstanden ist; wobei das Rühren bevorzugt bei einer Schergeschwindigkeit von 12m/s bis 16m/s erfolgt, weiter bevorzugt bei 14m/s; und/oder wobei das Rühren bevorzugt für 5 bis 30 Minuten erfolgt, weiter bevorzugt für 10 bis 20 Minuten;
iv) Zugeben eines mindestens einen Farbwechsel-Indikators gemäß Bestandteil 4 zu dem Gemisch iii) unter Rühren bis ein Gemisch iv) entstanden ist; wobei das Rühren bevorzugt bei einer Schergeschwindigkeit von 12m/s bis 16m/s erfolgt, weiter bevorzugt bei 14m/s; wobei das Rühren bevorzugt für 1 bis 10 Minuten erfolgt, weiter bevorzugt für 4 bis 6 Minuten; und
v) Entlüften des Gemischs iv) unter Vakuum und Rühren; wobei das Rühren bevorzugt bei einer Schergeschwindigkeit von 12m/s bis 18m/s erfolgt, weiter bevorzugt von 14m/s bis 16m/s; und/oder wobei das Rühren bevorzugt für 20 bis 40 Minuten erfolgt, weiter bevorzugt für 25 bis 35 Minuten.

8. Das Verfahren gemäß Anspruch 7 zur Herstellung einer Zusammensetzung, wobei der mindestens eine Typ I Photoinitiator zwei oder mehr verschiedene Typ I Photoinitiatoren umfasst, wobei bevorzugt zwei oder mehr verschiedene Typ I Photoinitiatoren in einander gelöst werden bevor sie gemäß Schritt iii) zu der Dispersion ii) gegeben werden, und/oder wobei die Temperatur der zwei oder mehr verschiedenen Typ I Photoinitiatoren beim Ineinander-Lösen bevorzugt 40°C beträgt, und/oder wobei das Ineinander-Lösen bevorzugt über Nacht erfolgt, besonders bevorzugt für 16 Stunden.

9. Eine Verwendung einer Zusammensetzung gemäß einem der Ansprüche 1 - 6 als Beschichtungsmasse, bevorzugt als Spachtelmasse, wobei die mit UV-Licht härtbare Zusammensetzung bevorzugt zum Beschichten von Oberflächen verwendet wird; und/oder wobei die mit UV-Licht härtbare Zusammensetzung weiter bevorzugt durch Spachteln auf eine Oberfläche aufgetragen wird; und/oder wobei die Oberflächen bevorzugt ausgewählt sind aus der Gruppe von Oberflächen von Kunststoffen, Oberflächen von glasfaser-verstärkten Kunststoffen, Oberflächen von kohlenstofffaser-verstärkten Kunststoffen, Oberflächen von Rotorblättern von Windkraftanlagen, Oberflächen von Metallen und Oberflächen von Holz; weiter bevorzugt von Oberflächen von Kunststoffen, Oberflächen von glasfaser-verstärkten Kunststoffen, Oberflächen von kohlenstofffaser-verstärkten Kunststoffen, Oberflächen von Rotorblättern von Windkraftanlagen und Oberflächen von Metallen; besonders bevorzugt von Oberflächen von glasfaser-verstärkten Kunststoffen und Oberflächen von kohlenstofffaser-verstärkten Kunststoffen und Oberflächen von Rotorblättern von Windkraftanlagen.

10. Ein Verfahren zum Beschichten einer Oberfläche, wobei das Verfahren die Schritte enthält:
I) Bereitstellen einer Zusammensetzung gemäß einem der Ansprüche 1 - 6;
II) Auftragen der Zusammensetzung auf die Oberfläche, bevorzugt durch Spachteln; bis eine farbige Schicht der Zusammensetzung auf der Oberfläche entstanden ist;
III) Behandeln der farbigen Schicht mit UV-Strahlung, bevorzugt mit einem UV-Handgerät, noch bevorzugter mit einem LED-UV-Handgerät; zum Aushärten der Zusammensetzung bis ein Farbumschlag der farbigen Schicht zu vollständig farblos eingetreten ist und damit das Entstehen einer ausgehärteten Schicht, bevorzugt einer vollständig ausgehärteten Schicht, anzeigt;
IV) optional Überarbeiten der ausgehärteten Schicht, bevorzugt durch Schleifen;
V) optional Wiederholen der Schritte II) bis IV) bis mindestens eine weitere ausgehärtete Schicht entstanden ist;
VI) optional weiteres Überarbeiten und Aufbringen weiterer Schichten, wobei die weiteren Schichten von den ausgehärteten Schichten der vorhergehenden Schritte verschieden sind, und/oder wobei die weiteren Schichten bevorzugt ausgewählt sind aus Lacken, Lacken auf Wasserbasis, Dispersionsfarbe, Decklack und Leading Edge Protection.

11. Ein beschichtetes Produkt, wobei das beschichtete Produkt eine Oberfläche enthält und eine darauf aufliegende ausgehärtete Schicht einer Zusammensetzung gemäß einem der Ansprüche 1 - 6, und/oder wobei die ausgehärtete Schicht eine Schichtdicke von bis zu 5mm aufweist; und/oder wobei die Oberfläche bevorzugt aus der Gruppe ausgewählt ist von Oberflächen von Kunststoffen, Oberflächen von glasfaser-verstärkten Kunststoffen, Oberflächen von kohlenstofffaser-verstärkten Kunststoffen, Oberflächen von Rotorblättern von Windkraftanlagen, Oberflächen von Metallen und Oberflächen von Holz; und/oder wobei das beschichtete Produkt bevorzugt nach einem Verfahren gemäß Anspruch 10 hergestellt wurde.
